# EUROPEAN PATENT APPLICATION

(11) **EP 4 325 364 A1**
(43) Date of publication of application: **21.02.2024**
(21) Application number: 22873962.9
(22) Date of filing: 20.10.2022
(51) Int. Cl.: G06F 11/22

(54) **FAULT DETECTION METHOD AND APPARATUS FOR SECURITY CHIP, ELECTRONIC DEVICE, AND MEDIUM**

(30) Priority: 06.07.2022 CN 202210789737
(71) Applicant: Beijing Smartchip Semiconductor Technology Company Limited, Beijing 102200 (CN); Beijing Smartchip Microelectronics Technology Company Limited, Beijing 100192 (CN)
(72) Inventor: DING, Xian, Beijing 102200 (CN); WANG, Yuwei, Beijing 102200 (CN); DU, Jun, Beijing 102200 (CN); BAI, Xuesong, Beijing 102200 (CN); FU, Lili, Beijing 102200 (CN); SUN, Tao, Beijing 102200 (CN); YI, Ling, Beijing 102200 (CN); MA, Bing, Beijing 102200 (CN)
(74) Representative: Meyer, Thorsten
(86) International application number: PCT/CN2022/126366
(87) International publication number: WO 2024/007481

(57) **Abstract**

The present disclosure provides a method and an apparatus for detecting a fault on a security chip, an electronic device, and a medium. The method includes: determining a type of current row data in a fault detection file, and when the current row data is detection policy data, determining composition information of the detection policy data, where the composition information of the detection policy data includes an instruction component; when the instruction component is a composite instruction, generating a detection instruction according to a fault detection dictionary and the instruction component, where the fault detection dictionary is generated according to a detection result of prior row data in the fault detection file; and performing fault detection on a to-be-detected chip according to the detection instruction and the composition information. According to the method and the apparatus for detecting a fault on a security chip, the electronic device, and the medium in the present disclosure, the detection result of the prior row data is automatically transmitted to fault detection corresponding to the current row data in a form of the composite instruction. In this way, transmission through manual replication is avoided and manual participation is reduced, thereby improving fault detection automation.

## Description

### TECHNICAL FIELD

The present disclosure relates to the field of security chip technologies, and in particular, to a method and an apparatus for detecting a fault on a security chip, an electronic device, and a medium.

### BACKGROUND

With the progress of information technologies, security chips are gradually widely used in a variety of devices in the power industry. For example, security chips are embedded into a smart electricity meter, a smart terminal, and an electric Internet of Things sensing device to realize security authentication of information interaction and encryption and decryption of communication data. The security chips need to pass through many steps from being delivered to being embedded into a variety of devices, and then to being finally used in actual environments, such as COS downloading of the security chips, creation of file directories, file data writing, initial key writing, key and digital certificate updating according to distribution of a key management system, and data updating according to a requirement of an information system. It is inevitable that faults occur in releasing of the security chips, key updating, data updating, or actual application environments due to omission or negligence in some steps. Therefore, it is necessary to design a method for detecting different faults on the security chips. However, in the related art, the method for detecting a fault on a security chip requires a large amount of manual participation, and a degree of automation is low.

### SUMMARY

The present disclosure is intended to resolve at least one of technical problems in the related art. Therefore, a first objective of the present disclosure is to provide a method for detecting a fault on a security chip. In this method, a detection result of prior row data is automatically transmitted to fault detection corresponding to current row data in a form of a composite instruction. In this way, transmission through manual replication is avoided and manual participation is reduced, thereby improving fault detection automation.

A second object of the present disclosure is to provide a computer-readable storage medium.

A third objective of the present disclosure is to provide an electronic device.

A fourth objective of the present disclosure is to provide an apparatus for detecting a fault on a security chip.

To achieve the foregoing objective, an embodiment of a first aspect of the present disclosure provides a method for detecting a fault on a security chip. The method includes: determining a type of current row data in a fault detection file, and when the current row data is detection policy data, determining composition information of the detection policy data, where the composition information of the detection policy data includes an instruction component; when the instruction component is a composite instruction, generating a detection instruction according to a fault detection dictionary and the instruction component, where the fault detection dictionary is generated according to a detection result of prior row data in the fault detection file; and performing fault detection on a to-be-detected chip according to the detection instruction and the composition information.

According to the method for detecting a fault on a security chip in this embodiment of the present disclosure, when it is determined that a type of current row data in a fault detection file is detection policy data, composition information of the detection policy data is determined, where the composition information of the detection policy data includes an instruction component; when the instruction component is a composite instruction, a detection instruction is generated according to a fault detection dictionary and the instruction component, where the fault detection dictionary is generated according to a detection result of prior row data in the fault detection file; and fault detection is performed on a to-be-detected chip according to the detection instruction and the composition information, so that the detection result of the prior row data is automatically transmitted to fault detection corresponding to the current row data in a form of the composite instruction. In this way, transmission through manual replication is avoided and manual participation is reduced, thereby improving fault detection automation.

In some embodiments of the present disclosure, the generating a detection instruction according to a fault detection dictionary and the instruction component includes: disassembling the instruction component according to a connector, and storing disassembled data in a first array; and updating an element in the first array according to the fault detection dictionary, and generating the detection instruction according to the updated first array.

In some embodiments of the present disclosure, the updating an element in the first array according to the fault detection dictionary includes: matching the element in the first array with a keyword in the fault detection dictionary; when the element matches the keyword, replacing the element with a value corresponding to the keyword; and when the element does not match the keyword, retaining the element.

In some embodiments of the present disclosure, the determining composition information of the detection policy data includes: determining the composition information of the detection policy data according to format switching data in a prior row.

In some embodiments of the present disclosure, the determining the composition information of the detection policy data according to format switching data in a prior row includes: disassembling, according to a first delimiter, the format switching data in the prior row to determine data content of the format switching data in the prior row; and determining the composition information of the detection policy data according to the data content of the format switching data in the prior row.

In some embodiments of the present disclosure, the data content of the format switching data in the prior row includes one or more of a first identifier, a second identifier, a third identifier, a fourth identifier, and a fifth identifier, the composition information of the detection policy data includes one or more of a card reader number, the instruction component, a detection instruction description, a return result judgment, and a to-be-stored variable name, and the data content of the format switching data in the prior row is in a one-to-one correspondence with the composition information of the detection policy data.

In some embodiments of the present disclosure, the performing fault detection on a to-be-detected chip according to the detection instruction and the composition information includes: when the composition information includes the instruction component, sending the detection instruction to the to-be-detected chip, and when return data of the to-be-detected chip is received, displaying the detection instruction and the return data; when the composition information includes the instruction component and the detection instruction description, sending the detection instruction to the to-be-detected chip, and when the return data of the to-be-detected chip is received, displaying the detection instruction, the detection instruction description, and the return data; and when the composition information includes the instruction component, the detection instruction description, and the return result judgment, splitting the return result judgment according to a second delimiter, storing split data in a second array, and performing the fault detection on the to-be-detected chip according to a quantity of elements in the second array.

In some embodiments of the present disclosure, the performing the fault detection on the to-be-detected chip according to a quantity of elements in the second array includes: when the quantity of elements in the second array is three, determining that the return result judgment includes expectation data, a first preset conclusion, and a second preset conclusion; sending the detection instruction to the to-be-detected chip, and when the return data of the to-be-detected chip is received, matching the return data with the expectation data; and determining, according to a matching result, that a detection conclusion is the first preset conclusion or the second preset conclusion, and displaying the detection instruction, the detection instruction description, the return data, and the detection conclusion.

In some embodiments of the present disclosure, the performing the fault detection on the to-be-detected chip according to a quantity of elements in the second array includes: when the quantity of elements in the second array is four, determining that the return result judgment includes judgment location data, expectation data, a first preset conclusion, and a second preset conclusion; sending the detection instruction to the to-be-detected chip, and when the return data of the to-be-detected chip is received, matching the return data with the expectation data according to the judgment location data; and determining, according to a matching result, that a detection conclusion is the first preset conclusion or the second preset conclusion, and displaying the detection instruction, the detection instruction description, the return data, and the detection conclusion.

In some embodiments of the present disclosure, the determining, according to a matching result, that a detection conclusion is the first preset conclusion or the second preset conclusion includes: if the matching result is expected, determining that the detection conclusion is the first preset conclusion; otherwise, determining that the detection conclusion is the second preset conclusion.

In some embodiments of the present disclosure, the composition information further includes the card reader number, and the sending the detection instruction to the to-be-detected chip includes: sending the detection instruction to the to-be-detected chip corresponding to the card reader number.

In some embodiments of the present disclosure, the composition information further includes the to-be-stored variable name, and the method further includes: when the return data of the to-be-detected chip is received, storing the return data in the fault detection dictionary according to the to-be-stored variable name.

In some embodiments of the present disclosure, after the determining composition information of the detection policy data, the method further includes: when the instruction component is a single instruction, generating the detection instruction according to the instruction component.

In some embodiments of the present disclosure, the determining a type of current row data in a fault detection file includes: when a sixth identifier is identified, determining that the current row data in the fault detection file is format switching data; when a seventh identifier is identified, determining that the current row data in the fault detection file is function data; and when no identifier is identified, determining that the current row data in the fault detection file is the detection policy data.

In some embodiments of the present disclosure, after the determining that the current row data in the fault detection file is function data, the method further includes: determining composition information of the function data; when the composition information of the function data includes a function name, a function input parameter, a first detection conclusion, and a second detection conclusion, inputting a parameter value corresponding to the function input parameter into a function corresponding to the function name, and outputting the first detection conclusion or the second detection conclusion according to an execution result of the function; and when the composition information of the function data includes the function name, the function input parameter, and a keyword in the fault detection dictionary, inputting the parameter value corresponding to the function input parameter into the function corresponding to the function name, and using the execution result of the function as a value corresponding to the keyword in the fault detection dictionary.

To achieve the foregoing objectives, an embodiment of a second aspect of the present disclosure provides a computer-readable storage medium. A program for detecting a fault on a security chip is stored on the computer-readable storage medium, and the program for detecting a fault on a security chip is executed by a processor to implement the method for detecting a fault on a security chip in any one of the foregoing embodiments.

According to the computer-readable storage medium in this embodiment of the present disclosure, when it is determined that a type of current row data in a fault detection file is detection policy data, composition information of the detection policy data is determined, where the composition information of the detection policy data includes an instruction component; when the instruction component is a composite instruction, a detection instruction is generated according to a fault detection dictionary and the instruction component, where the fault detection dictionary is generated according to a detection result of prior row data in the fault detection file; and fault detection is performed on a to-be-detected chip according to the detection instruction and the composition information, so that the detection result of the prior row data is automatically transmitted to fault detection corresponding to the current row data in a form of the composite instruction. In this way, transmission through manual replication is avoided and manual participation is reduced, thereby improving fault detection automation.

To achieve the foregoing objectives, an embodiment of a third aspect of the present disclosure provides an electronic device, including a memory, a processor, and a program for detecting a fault on a security chip, where the program for detecting a fault on a security chip is stored in the memory and can be run on the processor, and is executed by the processor to implement the method for detecting a fault on a security chip in any one of the foregoing embodiments.

According to the electronic device in this embodiment of the present disclosure, when it is determined that a type of current row data in a fault detection file is detection policy data, composition information of the detection policy data is determined, where the composition information of the detection policy data includes an instruction component; when the instruction component is a composite instruction, a detection instruction is generated according to a fault detection dictionary and the instruction component, where the fault detection dictionary is generated according to a detection result of prior row data in the fault detection file; and fault detection is performed on a to-be-detected chip according to the detection instruction and the composition information, so that the detection result of the prior row data is automatically transmitted to fault detection corresponding to the current row data in a form of the composite instruction. In this way, transmission through manual replication is avoided and manual participation is reduced, thereby improving fault detection automation.

To achieve the foregoing objective, an embodiment of a fourth aspect of the present disclosure provides an apparatus for detecting a fault on a security chip. The apparatus includes: a determining module, configured to determine a type of current row data in a fault detection file, and when the current row data is detection policy data, determine composition information of the detection policy data; a generation module, configured to: when an instruction component of the detection policy data is a composite instruction, generate a detection instruction according to a fault detection dictionary and the instruction component, where the fault detection dictionary is generated according to a detection result of prior row data; and a fault detection module, configured to perform fault detection on a to-be-detected chip according to the detection instruction and the composition information.

According to the apparatus for detecting a fault on a security chip in this embodiment of the present disclosure, when it is determined that a type of current row data in a fault detection file is detection policy data, composition information of the detection policy data is determined, where the composition information of the detection policy data includes an instruction component; when the instruction component is a composite instruction, a detection instruction is generated according to a fault detection dictionary and the instruction component, where the fault detection dictionary is generated according to a detection result of prior row data in the fault detection file; and fault detection is performed on a to-be-detected chip according to the detection instruction and the composition information, so that the detection result of the prior row data is automatically transmitted to fault detection corresponding to the current row data in a form of the composite instruction. In this way, transmission through manual replication is avoided and manual participation is reduced, thereby improving fault detection automation.

A part of additional aspects and advantages of the present disclosure is provided in the following descriptions, and the part will become apparent from the following descriptions, or may be learned from the practice of the present disclosure.

### BRIEF DESCRIPTION OF THE DRAWINGS

The foregoing and/or additional aspects and advantages of the present application will become apparent and readily understood from the descriptions of the embodiments with reference to the following accompanying drawings, in which:
FIG. 1 is a schematic flowchart of a method for detecting a fault on a security chip according to an embodiment of the present disclosure.
FIG. 2 is a schematic flowchart of a method for detecting a fault on a security chip according to another embodiment of the present disclosure.
FIG. 3 is a schematic flowchart of a method for detecting a fault on a security chip according to another embodiment of the present disclosure.
FIG. 4 is a schematic flowchart of a method for detecting a fault on a security chip according to another embodiment of the present disclosure.
FIG. 5 is a schematic flowchart of a method for detecting a fault on a security chip according to another embodiment of the present disclosure.
FIG. 6 is a schematic flowchart of a method for detecting a fault on a security chip according to another embodiment of the present disclosure.
FIG. 7 is a schematic flowchart of a method for detecting a fault on a security chip according to another embodiment of the present disclosure.
FIG. 8 is a structural block diagram of an electronic device according to an embodiment of the present disclosure.
FIG. 9 is a structural block diagram of an apparatus for detecting a fault on a security chip according to an embodiment of the present disclosure.

### DETAILED DESCRIPTION

The following describes in detail the embodiments of the present disclosure, and the examples of the embodiments are shown in the accompanying drawings. Identical or similar reference numerals represent identical or similar elements or elements having identical or similar functions. The embodiments described below with reference to the accompanying drawings are exemplary and are intended to explain the present disclosure without being construed as limiting the present disclosure.

The following describes in detail a method and an apparatus for detecting a fault on a security chip, an electronic device, and a medium according to the embodiments of the present disclosure with reference to the accompanying drawings.

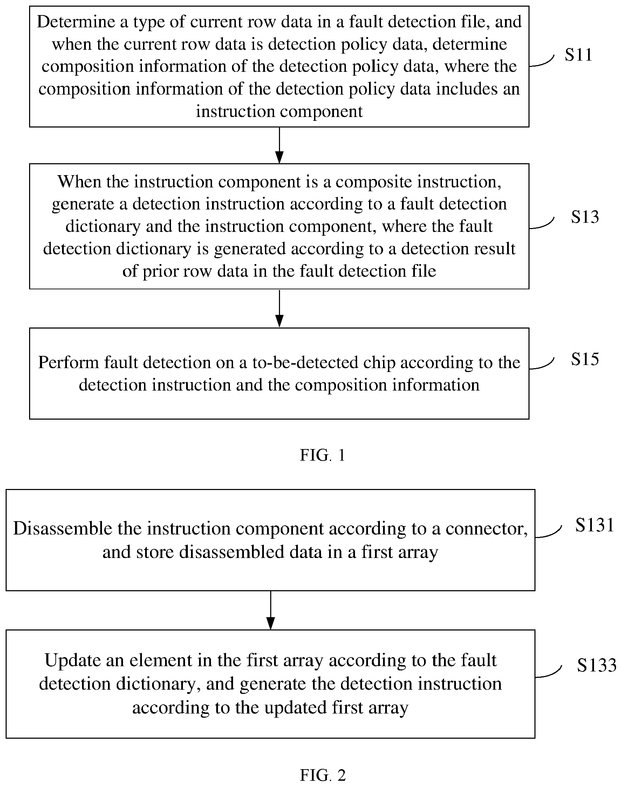

FIG. 1 is a schematic flowchart of a method for detecting a fault on a security chip according to an embodiment of the present disclosure. As shown in FIG. 1, the method for detecting a fault on a security chip in this embodiment of the present disclosure includes the following steps:
S 11: Determine a type of current row data in a fault detection file, and when the current row data is detection policy data, determine composition information of the detection policy data, where the composition information of the detection policy data includes an instruction component.
S13: When the instruction component is a composite instruction, generate a detection instruction according to a fault detection dictionary and the instruction component, where the fault detection dictionary is generated according to a detection result of prior row data in the fault detection file.
S15: Perform fault detection on a to-be-detected chip according to the detection instruction and the composition information.

According to the method for detecting a fault on a security chip in this embodiment of the present disclosure, when it is determined that a type of current row data in a fault detection file is detection policy data, composition information of the detection policy data is determined, where the composition information of the detection policy data includes an instruction component; when the instruction component is a composite instruction, a detection instruction is generated according to a fault detection dictionary and the instruction component, where the fault detection dictionary is generated according to a detection result of prior row data in the fault detection file; and fault detection is performed on a to-be-detected chip according to the detection instruction and the composition information, so that the detection result of the prior row data is automatically transmitted to fault detection corresponding to the current row data in a form of the composite instruction. In this way, transmission through manual replication is avoided and manual participation is reduced, thereby improving fault detection automation. In addition, fault detection that can be performed only by verifying a security chip application procedure can be automatically implemented. It can be understood that in the related art, fault detection is performed only by simply sending and receiving the detection instruction. When the security chip is faulty, a tester places the security chip in an adapter board designed according to an encapsulation form, and then inserts the adapter board into a slot of a card reader. A USB port of the card reader is connected to a PC, so that the tester designs the detection instruction according to a fault phenomenon described by a customer, and sends, to the security chip by host computer software of the PC, the detection instruction designed for this fault phenomenon. When a complex detection instruction is required, such as application procedure verification, external authentication is required to obtain read/write permission of the security chip before a read/write instruction can be performed, or when a random number or a chip serial number obtained in a prior step is used to perform key distribution and then encryption, the tester needs to manually replicate or modify a related return result, so that subsequent fault detection can be performed. In this case, a large amount of manual participation is required, and a degree of fault detection automation is low.

Specifically, the fault detection file may be understood as a configuration file that is prestored in software for detecting a fault on a security chip and that is used to perform the fault detection on the security chip. One security chip corresponds to one fault detection file. The fault detection file may be set by a developer or a tester.

In some embodiments, the fault detection file may be established by performing the following steps:
(1) Add a folder named ProductList to the software for detecting a fault on a security chip.
(2) Add a product model file named "NameList" in the ProductList folder, perform separation in the NameList file by row, and write a product model of the security chip below:
   SC1161Y
   SC1166Y
   SC1168Y
(3) Add a fault detection file named after the product model in the NameList file to the ProductList folder, such as an SC1161Y file, an SC1166Y file, and an SC1168Y file, and then perform separation in the fault detection file by row and write one row of row data. When a security chip type is added, a new product model may be added to the NameList file, a fault detection file may be named based on the product model, and data may be added to the fault detection file in rows. When a new fault occurs on a security chip, new data may be directly added to a fault detection file named by a product model of the security chip, to detect the new fault. In this way, each fault detection file and data in the fault detection file can be added, deleted, and modified flexibly, thereby ensuring scalability of the software for detecting a fault on a security chip. It can be understood that in the related art, different fault detection software is designed for security chips of different product models. Once the software is designed, a related code cannot be modified. When there is a security chip of a new product model or a new fault occurs, the fault detection software can only be redesigned, that is, the fault detection software in the related art has poor scalability.

Further, a model of the to-be-detected chip is obtained, a fault configuration file corresponding to the model of the to-be-detected chip is obtained, and fault detection is performed on the to-be-detected chip according to the fault configuration file corresponding to the model of the to-be-detected chip. The current row data may be understood as any row of data in the fault detection file. The prior row data may be understood that a row of data that is in the same fault detection file as the current row data and that is read before the current row data. The type of the current row data may be one of detection policy data, format switching data, and function data. In some embodiments of the present disclosure, the determining a type of current row data in a fault detection file includes: when a sixth identifier is identified, determining that the current row data in the fault detection file is format switching data; when a seventh identifier is identified, determining that the current row data in the fault detection file is function data; and when no identifier is identified, determining that the current row data in the fault detection file is the detection policy data. The sixth identifier is different from the seventh identifier, the detection policy data is used to generate the detection instruction, the format switching data is used to assist in determining composition information of detection policy data in a next row, and the function data is used to perform function processing. In an example, the sixth identifier is a symbol "@", and the sixth identifier is located at the beginning of the format switching data, that is, data starting with @ in the fault detection file is the format switching data; the seventh identifier is a symbol "&" and the seventh identifier is located at the beginning of the function data, that is, data starting with & in the fault detection file is the format switching data; and the remaining data is the detection policy data. It should be noted that in another example, the sixth identifier and the seventh identifier may be another symbol or an identifier, which is not limited herein.

The instruction component of the detection policy data in the current row may be a composite instruction or a single instruction. The composite instruction may be used in a case that there is a specified logical relationship between adjacent detection instructions, or the detection result of the detection instruction corresponding to the prior row data needs to be used for a detection instruction corresponding to next row data. Therefore, when the instruction component is a composite instruction, the instruction component is not one piece of fixed instruction data, but a plurality of pieces of instruction data connected by at least one connector, that is, when the instruction component is a composite instruction, the instruction component includes at least one connector and at least two pieces of instruction data. In some embodiments of the present disclosure, after the determining composition information of the detection policy data, the method further includes: when the instruction component is a single instruction, generating the detection instruction according to the instruction component. It can be understood that when the instruction component is a single instruction, the instruction component is one piece of fixed instruction data, and does not include any connector. In this case, the instruction component may be directly used as the detection instruction.

In some embodiments, products such as an intelligent CPU card, an RFID electronic tag, and an electronic seal include security chips. Therefore, the method for detecting a fault on a security chip may be further applied to fault detection and testing of the products such as the intelligent CPU card, the RFID electronic tag, and the electronic seal.

With reference to FIG. 2, in some embodiments of the present disclosure, the "generating a detection instruction according to a fault detection dictionary and the instruction component" in step S13 includes:
S131: Disassemble the instruction component according to a connector, and store disassembled data in a first array.
S133: Update an element in the first array according to the fault detection dictionary, and generate the detection instruction according to the updated first array.

In this way, the detection instruction corresponding to the current row data can be generated according to the detection result of the prior row data. In this way, dynamic transmission of associated data that needs to be used for generating the detection instruction according to the detection result of the prior row data and the current row data is implemented, so that fault detection that can be performed only by verifying a security chip application procedure can be automatically implemented.

Specifically, instruction data in the composite instruction may include data in a fixed format and data in an unfixed format, and the data in the fixed format and the data in the unfixed format are separated by a connector. The data in the fixed format may be directly used as a part of the detection instruction, and the data in the unfixed format cannot be directly used as a part of the detection instruction. A value corresponding to the data in the unfixed format needs to be determined by searching the fault detection dictionary, that is, the value corresponding to the data in the unfixed format is determined according to the detection result of the prior row data, and the value is further used as another part of the detection instruction. The connector in the composite instruction may be a symbol "+" or another symbol, which is not limited herein.

The first array may be understood as an array used to store data obtained after the instruction component is disassembled.

In an example, the instruction component (composite instruction) is: 802662020063+ChipNo+Chip _PublicKey, and the instruction component may be disassembled into three pieces of instruction data: 802662020063, ChipNo, and Chip_PublicKey according to the connector, where 802662020063 may be understood as data in a fixed format, and ChipNo and Chip _PublicKey may be understood as data in an unfixed format. 802662020063, ChipNo, and Chip _PublicKey are stored in the first array. In this case, elements in the first array are 802662020063, ChipNo, and Chip _PublicKey. Further, the elements in the first array are updated according to the fault detection dictionary, and the updated elements in the first array are concatenated in a storage order to obtain the detection instruction, that is, the detection instruction does not include a connector.

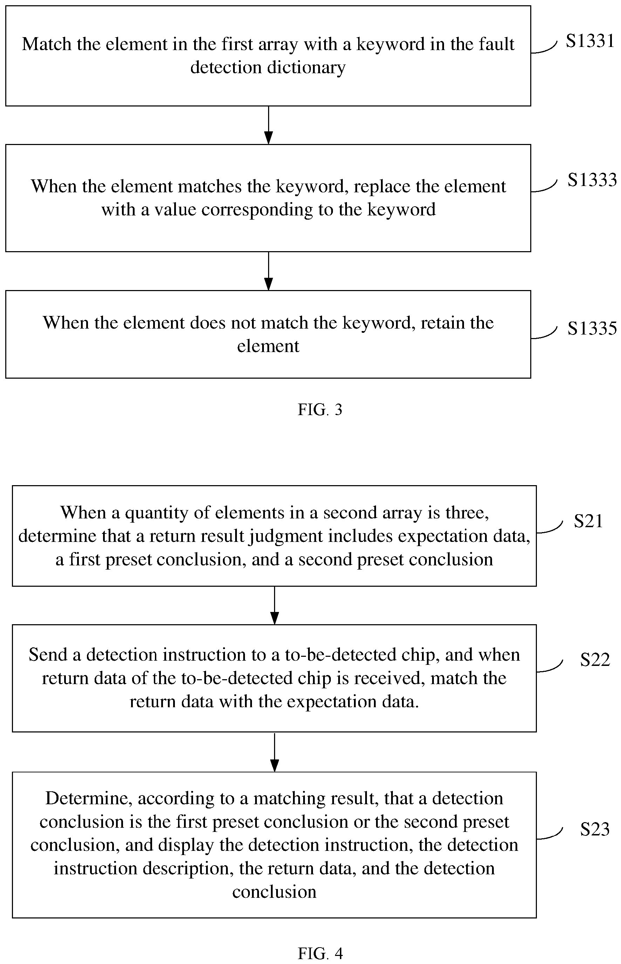

With reference to FIG. 3, in some embodiments of the present disclosure, the "updating an element in the first array according to the fault detection dictionary" in step S133 includes:
S133 1: Match the element in the first array with a keyword in the fault detection dictionary.
S1333: When the element matches the keyword, replace the element with a value corresponding to the keyword.
S1335: When the element does not match the keyword, retain the element.

In this way, through flexible application of a dictionary type in a computer language, dynamic transmission of associated data that needs to be used for generating the detection instruction according to the detection result of the prior row data and the current row data is implemented, thereby facilitating automatic implementation of fault detection that can be performed only by verifying a security chip application procedure. It can be understood that in a security chip application procedure test method in the related art, a detection result of the security chip is defined as a variable for storage, and then a value is manually assigned when this result is subsequently used. In addition, manual assignment requires the tester to modify the code of the fault detection software, and it is equivalent to rewriting the entire code of the fault detection software, which is cumbersome and not flexible enough.

Specifically, a variable a of a dictionary type may be defined in a program. The dictionary a is the fault detection dictionary, and the detection result of the prior row data may be named. A named keyword and a returned value are stored in the fault detection dictionary as a pair of key and value, that is, elements in the fault detection dictionary may include a keyword (key) and a value (value), and the key and the value are in a one-to-one correspondence. Both the key and the corresponding value in the fault detection dictionary may be obtained by designing or changing a related format of the prior row data, which is very flexible.

In a process of updating the element in the first array according to the fault detection dictionary, first, whether there is a key whose name is the same as that of the element in the first array is matched in the fault detection dictionary starting from the first element in the first array. If the key with the same name is matched when traversing the elements in the fault detection dictionary, content of the element in the first array is replaced with a value corresponding to the key, so that the content of the modified element in the first array is used as a part of the detection instruction. If the key with the same name is not matched after all elements in the fault detection dictionary are traversed, the content of the element in the first array keeps unchanged and is stored, so that the content of the element is used as a part of the detection instruction. In this way, all elements in the first array are traversed. In this way, if the detection result of the prior row data needs to be used when the detection instruction is generated according to the instruction component, the value corresponding to the key is added to the detection instruction as content in a manner of searching for the key with the same in the fault detection dictionary.

With reference to the foregoing example, when the instruction component is 802662020063+ChipNo+Chip_PublicKey, it is assumed that the first array is [802662020063; ChipNo; Chip_PublicKey]. A keyword whose name is the same as 802662020063 does not exist in the fault detection dictionary, a value corresponding to the keyword ChipNo in the fault detection dictionary is 0010, and a value corresponding to the keyword Chip _PublicKey in the fault detection dictionary is 12345. In this case, a new first array obtained after the first array is updated according to the fault detection dictionary is [802662020063; 0010; 12345]. Further, the detection instruction 802662020063001012345 may be generated according to the new first array.

In some embodiments of the present disclosure, the determining composition information of the detection policy data includes: determining the composition information of the detection policy data according to format switching data in a prior row.

In this way, it is convenient for a program to accurately identify the composition information of the detection policy data in the current row in a fault detection process, and it is convenient for a tester to accurately identify the composition information of the detection policy data in the current row when modifying or adding the detection policy data in the fault detection file, so as to configure the detection policy data.

It should be noted that the fault detection file may include a plurality of rows of format switching data and a plurality of rows of detection policy data, where the detection policy data in the current row is determined according to the format switching data in the prior row closest to the detection policy data.

In some embodiments of the present disclosure, the determining the composition information of the detection policy data according to format switching data in a prior row includes: disassembling, according to a first delimiter, the format switching data in the prior row to determine data content of the format switching data in the prior row; and determining the composition information of the detection policy data according to the data content of the format switching data in the prior row.

In this way, the composition information of the detection policy data can be accurately identified.

Specifically, the format switching data may include the sixth identifier, the first delimiter, and the data content, and the detection policy data may include the first delimiter and the composition information. In some embodiments of the present disclosure, the data content of the format switching data in the prior row includes one or more of a first identifier, a second identifier, a third identifier, a fourth identifier, and a fifth identifier, the composition information of the detection policy data includes one or more of a card reader number, the instruction component, a detection instruction description, a return result judgment, and a to-be-stored variable name, and the data content of the format switching data in the prior row is in a one-to-one correspondence with the composition information of the detection policy data. In the composition information of the detection policy data, other composition information is optional except the instruction component. When the detection policy data in the fault detection file is added or modified, the composition information of each row of the detection policy data may be flexibly configured according to an actual situation. It can be understood that the first delimiter in the format switching data is used to separate the sixth identifier, the first identifier, the second identifier, the third identifier, the fourth identifier, and the fifth identifier, and the first delimiter in the detection policy data is used to separate the card reader number, the instruction component, the detection instruction description, the return result judgment, and the to-be-stored variable name.

In an example, the first identifier is number 1, the second identifier is number 2, the third identifier is number 3, the fourth identifier is number 4, and the fifth identifier is number 5. The composition information of the detection policy data corresponding to the number 1 is the card reader number, the composition information of the detection policy data corresponding to the number 2 is the instruction component, the composition information of the detection policy data corresponding to the number 3 is the detection instruction description, the composition information of the detection policy data corresponding to the number 4 is the return result judgment, and the composition information of the detection policy data corresponding to the number 5 is the to-be-stored variable name. As shown in Table 1, the data content of the format switching data is matched with Table 1 to determine the composition information of the subsequent detection policy data.

**Table 1**

| Number | Composition information of the detection policy data |
|---|---|
| 1 | Card reader number |
| 2 | Instruction component |
| 3 | Detection instruction description |
| 4 | Return result judgment |
| 5 | To-be-stored variable name |

Further, the first delimiter may be a symbol "|", and a first digit of the format switching data is the sixth identifier. Therefore, when a difference between the quantity of piece of "|" in the format switching data in the prior row and the quantity of piece of detection policy data "|" in the current row is 1, the quantity of piece of data content of the format switching data in the prior row is exactly the same as the quantity of piece of composition information of the detection policy data in the current row. For example, the quantity is 2, and the data content of the format switching data in the prior row is a number 1 and a number 2. In this case, the program splits and disassembles the detection policy data in the current row from left to right according to a rule of the format switching data in the prior row, to determine that a component of the detection policy data is the card reader number and the instruction component. When the difference between the quantity of piece of "|" in the format switching data in the prior row and the quantity of piece of detection policy data "|" in the current row is greater than or equal to 2, the quantity of piece of data content of the format switching data in the prior row is greater than the quantity of piece of composition information of the detection policy data in the current row. For example, the quantity of piece of data content is 4, the data content of the format switching data in the prior row is a number 1, a number 2, a number 3, and a number 5, and the quantity of pieces of composition information of the detection policy data in the current row is 2. In this case, the program splits and disassembles the detection policy data in the current row from left to right, so that it can be determined, according to the number 1, that the leftmost composition information of the detection policy data is the card reader number, and it can be determined, according to the number 2, that the composition information on the secondary left side of the detection policy data is the instruction component, until all composition information of the detection policy data in the current row is determined, and then the remaining numbers 3 and 5 are ignored. When the quantity of piece of "|" in the format switching data in the prior row is less than the quantity of piece of detection policy data "|" in the current row, an error may be reported to prompt the detection instruction to be modified. It should be noted that in another example, the first delimiter may be another symbol, and the first identifier, the second identifier, the third identifier, the fourth identifier, and the fifth identifier may be another number, a symbol, or the like. This is not limited herein.

In some embodiments of the present disclosure, the performing fault detection on a to-be-detected chip according to the detection instruction and the composition information includes: when the composition information includes the instruction component, sending the detection instruction to the to-be-detected chip, and when return data of the to-be-detected chip is received, displaying the detection instruction and the return data.

In this way, the detection policy data in the current row is versatile, and can be compatible with an operation method in the related art and a detection habit of a tester. It may be determined, according to whether the return data is received, whether hardware connection of the to-be-detected chip is normal.

Specifically, when the composition information includes the instruction component, the detection instruction is sent to the to-be-detected chip, and when the return data of the to-be-detected chip is received, the detection instruction and the return data are displayed, no judgment is made, and no conclusion is given. In this case, the fault detection method is equivalent to a method for receiving and sending an instruction by a software operation card reader in the related art, that is, the detection instruction is sent to obtain the return data to be displayed.

In an example, the composition information of the detection policy data in the current row is: 803600010000, where "803600010000" is an instruction component and is a single instruction.

In some embodiments of the present disclosure, the performing fault detection on a to-be-detected chip according to the detection instruction and the composition information includes: when the composition information includes the instruction component and the detection instruction description, sending the detection instruction to the to-be-detected chip, and when the return data of the to-be-detected chip is received, displaying the detection instruction, the detection instruction description, and the return data.

In this way, the detection instruction description is added for display, thereby improving readability.

Specifically, when the composition information includes the instruction component and the detection instruction description, whether content of the return data is correct is determined, but no conclusion is given. A default format of the return data of the to-be-detected chip is status word + returned content. The detection instruction is sent to the to-be-detected chip, the sent detection instruction and the return data of the to-be-detected chip are displayed, and the detection instruction description is also displayed. In this case, the fault detection method is applicable to a case that content of the return data does not need to be correctly determined, and only the returned status word is used to determine whether the chip communicates normally.

In an example, the composition information of the detection policy data in the current row is: 803600010000|obtain a COS version of the security chip, where "803600010000" is the instruction component and a single instruction, and "obtain a COS version of the security chip" is the detection instruction description. "803600010000" may be directly sent to the to-be-detected chip as the detection instruction, and the obtained return data is status word + COS version of the to-be-detected chip. Correctness of the status word in the program is determined. If the status word is 9000, it is determined that a communication function of the to-be-detected chip is normal, and the program directly displays the COS version of the to-be-detected chip. If the status word is not 9000, the program reports an error to determine, according to the status word returned by the instruction, whether communication software of the chip is normal.

In some embodiments of the present disclosure, the performing fault detection on a to-be-detected chip according to the detection instruction and the composition information includes: when the composition information includes the instruction component, the detection instruction description, and the return result judgment, splitting the return result judgment according to a second delimiter, storing split data in a second array, and performing the fault detection on the to-be-detected chip according to a quantity of elements in the second array.

In this way, fault detection is performed flexibly according to the quantity of elements in the second array corresponding to the return result judgment.

Specifically, the second delimiter may be an English symbol ",", or may be a symbol "," or another symbol, which is not limited herein.

With reference to FIG. 4, in some embodiments of the present disclosure, step S155 includes:
S21: When the quantity of elements in the second array is three, determine that the return result judgment includes expectation data, a first preset conclusion, and a second preset conclusion.
S22: Send the detection instruction to the to-be-detected chip, and when the return data of the to-be-detected chip is received, match the return data with the expectation data.
S23. Determine, according to a matching result, that a detection conclusion is the first preset conclusion or the second preset conclusion, and display the detection instruction, the detection instruction description, the return data, and the detection conclusion.

In this way, data at a default location of the return data can be automatically analyzed, and a detection conclusion is given, so that analyzability is improved. In addition, a result returned by a tester through analysis is avoided, thereby avoiding an analysis error of the tester and improving detection efficiency and accuracy.

Specifically, the expectation data in this case may be understood as data at a default location (for example, the first two digits) of the expected return data. The first preset conclusion may be understood as a detection conclusion that should be given when the return data matches the expectation data. The second preset conclusion may be understood as a detection conclusion that should be given when the return data does not match the expectation data. In some embodiments of the present disclosure, the determining, according to a matching result, that a detection conclusion is the first preset conclusion or the second preset conclusion includes: if the matching result is expected, determining that the detection conclusion is the first preset conclusion; otherwise, determining that the detection conclusion is the second preset conclusion.

In an example, the composition information of the detection policy data in the current row is: 803600020000|ESAM serial number:| ?52 , SC1168Y chip, non-SC1168Y chip, where "803600020000" is an instruction component and is a single instruction, "ESAM serial number:" is a detection instruction description, and "?52, SC1168Y chip, non-SC1168Y chip" is a return result judgment, where "252" is expectation data, "SC1168Y chip" is a first preset conclusion, and "non-SC1168Y chip" is a second preset conclusion. Further, "752" indicates that it is determined whether the first two bits of the return data are 52. If yes, it is determined that the detection conclusion is "SC1168Y chip", and that "it may be determined, by the returned ESAM serial number, that a product model of the to-be-detected chip is correct and is SC1168Y chip" is displayed. Otherwise, it is determined that the detection conclusion is "non-SC1168Y chip", and that "it may be determined, by the returned ESAM serial number, that the product model of the to-be-detected chip is incorrect and is a non-SC1168Y chip" is displayed.

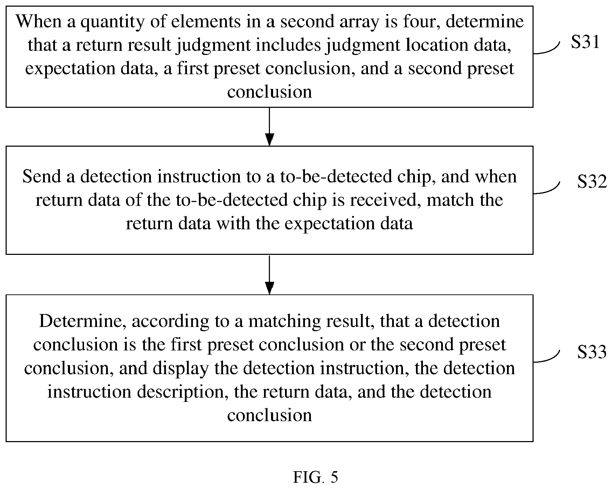

With reference to FIG. 5, in some embodiments of the present disclosure, step S155 includes:
S31: When the quantity of elements in the second array is four, determine that the return result judgment includes judgment location data, expectation data, a first preset conclusion, and a second preset conclusion;
S32: Send the detection instruction to the to-be-detected chip, and when the return data of the to-be-detected chip is received, match the return data with the expectation data according to the judgment location data.
S33. Determine, according to a matching result, that a detection conclusion is the first preset conclusion or the second preset conclusion, and display the detection instruction, the detection instruction description, the return data, and the detection conclusion.

In this way, data at a specified location of the return data can be automatically analyzed, and a detection conclusion is given, so that analyzability is improved. In addition, a result returned by a tester through analysis is avoided, thereby avoiding an analysis error of the tester and improving detection efficiency and accuracy.

Specifically, the expectation data in this case may be understood as data at a default location (determined according to the judgment location data) of the expected return data. The first preset conclusion may be understood as a detection conclusion that should be given when the return data matches the expectation data. The second preset conclusion may be understood as a detection conclusion that should be given when the return data does not match the expectation data. In some embodiments of the present disclosure, the determining, according to a matching result, that a detection conclusion is the first preset conclusion or the second preset conclusion includes: if the matching result is expected, determining that the detection conclusion is the first preset conclusion; otherwise, determining that the detection conclusion is the second preset conclusion. The judgment location data may include a matched start location and a length. In this way, it is applicable to a case that data that needs to be matched is not at the default location of the return data, and a location of judgment data needs to be at the specific location of the return data and has a specific length.

In an example, the composition information of the detection policy data in the current row is: 803600020000|ESAM serial number:|[6,4], ^{?4455}, SC1168Y chip, non-SC1168Y chip, where "|[6,4], ^{?4455}, SC1168Y chip, non-SC1168Y chip" is a return result judgment, where "[6,4]" is judgment location data, "^{?4455}" is expectation data, "SC1168Y chip" is a first preset conclusion, and "non-SC1168Y chip" is a second preset conclusion. Further, "[6, 4]" indicates that the matched start location is the seventh digit and the length is 4, and " ^{?4455} " indicates whether data that starts from the seventh digit and whose length is 4 in the return data (for example, 1122334455667788) is 4455.

In some embodiments, different colors are used to display the detection instruction, the detection instruction description, the return data, and the detection conclusion. When the detection conclusion is the second preset conclusion, salient display may be performed on the detection conclusion, for example, display in bold, display in a red font, and display in a red stripe. In this way, it is convenient for a tester to quickly identify and analyze the detection conclusion.

It should be noted that, because the card reader number, the instruction component, the detection instruction description, the return result judgment, and the to-be-stored variable name in this method are all placed in the fault detection file instead of being written in code of the fault detection software, the card reader number, the instruction component, the detection instruction description, the return result judgment, and the to-be-stored variable name may be flexibly added, deleted, or modified.

In some embodiments of the present disclosure, the composition information further includes the card reader number, and the sending the detection instruction to the to-be-detected chip includes: sending the detection instruction to the to-be-detected chip corresponding to the card reader number.

In this way, the method can be applicable to fault detection in a case that there is more than one operation object.

Specifically, the card reader number may be understood as a card reader number corresponding to a current operation object. When the current operation object is only the to-be-detected chip, the composition information may not include the card reader number. When the current operation object includes the to-be-detected chip and another operation object, a card reader number used when the to-be-detected chip is detected may be set to 1, and a card reader number used when the another operation object is detected is set to another value other than 1. Different card reader numbers may be selected according to a quantity of operation objects. When there are a plurality of operation objects, a plurality of card reader numbers are set.

In an example, fault detection of failed identity authentication between a security chip of an electric meter and a user card is simulated, and operation objects include the security chip of the electric meter and the user card. A card reader number corresponding to the security chip of the electric meter may be set to 1, and a card reader number corresponding to the user card is set to 2. When it is determined that the card reader number corresponding to the detection policy data in the current row is 1, the detection instruction corresponding to the detection policy data in the current row is sent to the security chip of the electric meter. When it is determined that the card reader number corresponding to the detection policy data in the current row is 2, the detection instruction corresponding to the detection policy data in the current row is sent to the user card.

In some embodiments of the present disclosure, the composition information further includes the to-be-stored variable name, and the method further includes: when the return data of the to-be-detected chip is received, storing the return data in the fault detection dictionary according to the to-be-stored variable name.

In this way, the return data obtained according to the detection policy data in the current row can be stored in a memory, so that the detection result of the current row data is transmitted to a fault detection process of subsequent row data by the fault detection dictionary, which is conducive to automatic implementation of fault detection that can be performed only by verifying a security chip application procedure.

In an example, fault detection in which encryption cannot be performed on a public key value of the security chip is simulated, an operation object is only the security chip, and each row of data in the fault detection file is as follows:
@|2|3|5
   803600020000|obtain a serial number of the security chip:|Chip_PublicKey
   803000000000|obtain a COS version of the security chip:|Chip_PublicKey
@|2|3
   802662020063+ChipNo+Chip_PublicKey|public key encryption of the security chip:

A second row of data is used as an example. After the to-be-detected chip executes the detection instruction 803600020000, an 8-byte string c is returned. The computer program first searches the fault detection dictionary to determine whether a keyword named ChipNo exists. If no, a keyword named ChipNo is added, and the string c is used as a value of the keyword ChipNo. If the keyword named ChipNo is found in the fault detection dictionary, the value corresponding to the keyword is directly replaced with the string c.

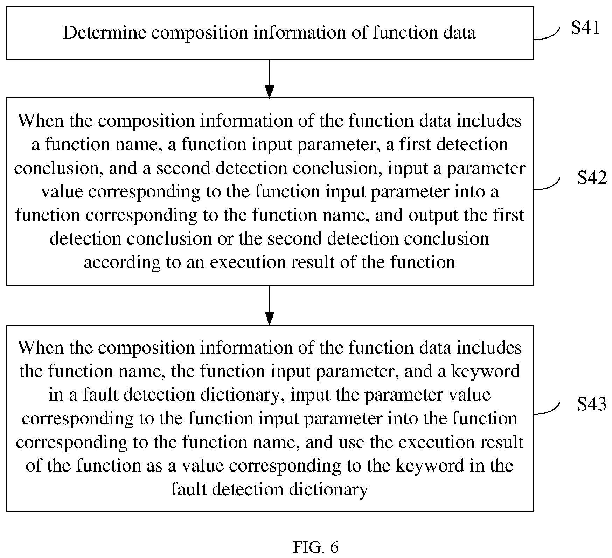

With reference to FIG. 6, in some embodiments of the present disclosure, after the determining that the current row data in the fault detection file is function data, the method further includes:
S41: Determine composition information of the function data.
S42: When the composition information of the function data includes a function name, a function input parameter, a first detection conclusion, and a second detection conclusion, input a parameter value corresponding to the function input parameter into a function corresponding to the function name, and output the first detection conclusion or the second detection conclusion according to an execution result of the function.
S43: When the composition information of the function data includes the function name, the function input parameter, and a keyword in the fault detection dictionary, input the parameter value corresponding to the function input parameter into the function corresponding to the function name, and use the execution result of the function as a value corresponding to the keyword in the fault detection dictionary.

In this way, by the function data, the detection conclusion may be directly output, the value corresponding to the keyword in the fault detection dictionary may be modified, or a value corresponding to a keyword in the fault detection dictionary may be processed to obtain a new keyword and a value, so that fault detection that can be performed only by verifying a security chip application procedure can be automatically implemented. It can be understood that, when the detection instruction is generated according to the composite instruction, sometimes the return data of the detection policy data in the prior row is required, sometimes a negated result of the return data instead of the return data itself is required, or a result of combining the return data with another string is required, or an exclusive OR of the return data and another string is returned; or whether values of two variables are equal needs to be determined in the application procedure. Therefore, a related processing function needs to be used.

Specifically, a processing function of related data in fault detection of some common chips may be predefined, so that when the function data is recognized, the corresponding processing function is invoked according to a function name in the function data to perform data processing. The first detection conclusion may be understood as a detection conclusion given when the function is successfully executed. The second detection conclusion may be understood as a detection conclusion given when the function fails to be executed.

In an example, the function data is: &|DataCompare|ESAM_ERand,Card_ERand| identity authentication between ESAM and the user card succeeds, and identity authentication between ESAM and the user card fails, where "&" is the seventh identifier, "|" is the first delimiter, "DataCompare" is the function name, "ESAM_ERand,Card_ERand is the function input parameter, "identity authentication between ESAM and the user card succeeds" is the first detection conclusion, and "identity authentication between ESAM and the user card fails" is the second detection conclusion. Further, a meaning of the function data is: the DataCompare data comparison function is invoked, and ESAM_ERand and Card_ERand need to search the fault detection dictionary to determine whether keywords with the same name exist. If yes, a value corresponding to the keyword with the same name is input into the DataCompare function as an input parameter, and it is determined whether data of values corresponding to ESAM_ERand and Card_ERand is consistent. If yes, the first detection conclusion "identity authentication between ESAM and the user card succeeds" is output. If no, the second detection conclusion "identity authentication between ESAM and the user card fails" is output. In this way, the corresponding detection conclusion is output by a result of data comparison.

In another example, the function data is: &|DataBack|ESAM_Rand| identity authentication between ESAM _Rand_Back and the user card succeeds, and identity authentication between ESAM and the user card fails, where "&" is the seventh identifier, "|" is the first delimiter, "DataBack" is the function name, "ESAM_Rand" is the function input parameter, "ESAM _Rand _Back" is a keyword of the fault detection dictionary. Further, a meaning of the function data is: a negation function of the DataBack data is invoked. ESAM_Rand needs to search the fault detection dictionary to determine whether a keyword with a same name exists. If yes, a value corresponding to the keyword with the same name is input into the DataBack function as an input parameter to obtain a result obtained after a value corresponding to the ESAM_Rand is negated, and the result is used as a value corresponding to the keyword ESAM_Rand_Back in the fault detection dictionary. In this way, the value corresponding to the keyword ESAM _Rand _Back in the fault detection dictionary can be changed.

The following describes the fault detection method in this embodiment of the present disclosure by a complete example. In an example, fault detection of failed identity authentication between a security chip of an electric meter and a user card is simulated, and operation objects are the security chip and the user card. The fault detection file is designed as follows:
@|1|2
   2|00A40000023F00
@|1|2|3|5
   2|00B0990008|Obtain a serial number of the user card:|CardNo
   2|00A4000002DF01
   1|800400080000|obtain a random number of the security chip:|ESAM_Rand
   1|80080801+0010+CardNo+ESAM_Rand|the security chip calculates a random number ciphertext K1: |ESAM_ERand
   2|0088000108+ESAM_Rand|the user card calculates a random number ciphertext K2:|Card_ERand
   &|DataCompare|ESAM_ERand,Card_ERand|identity authentication between ESAM and the user card succeeds, and identity authentication between ESAM and the user card fails

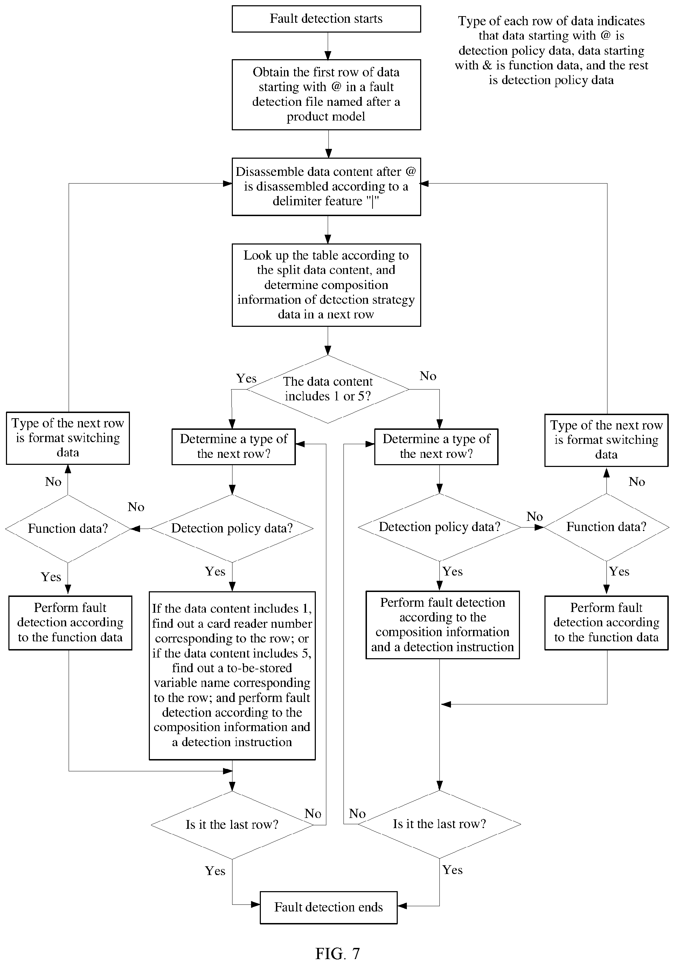

During fault detection, the tester first determines a product model of the security chip of the electric meter, and selects a specific product model on a software interface. After selecting the specific product model, the tester clicks to start detection. The software automatically maps the product model to the corresponding fault detection file, and performs fault detection on the security chip of the electric meter sequentially according to each row of data in the fault detection file, as shown in FIG. 7.

Specifically, the software first determines that a first row of data is format switching data according to the sixth identifier @, further determines that data content of the format switching data is sequentially a number 1 and a number 2 from left to right according to the first delimiter "|", and determines, through table lookup, that composition information of detection policy data in a next row is sequentially a card reader number and an instruction component from left to right.

Then, it is determined that a second row of data is detection policy data, and it is determined, according to the format switching data of the first row, that the detection policy data of the second row is sequentially a card reader number and an instruction component from left to right. Because the instruction component does not include a connector +, it may be determined that the instruction component in the detection policy data of the second row is a single instruction, and then 00A40000023F00 is directly sent to a user card corresponding to the card reader number 2 as a detection instruction, and return data of the user card is received.

The, it is determined that a third row of data is format switching data according to the sixth identifier @, it is further determined, according to the first delimiter "|", that data content of the format switching data is sequentially a number 1, a number 2, a number 3, and a numbers from left to right, and it is determined, through table lookup, that composition information of detection policy data in a next row is sequentially a card reader number, an instruction component, a detection instruction description, and a to-be-stored variable name from left to right.

Then, it is determined that a fourth row of data is detection policy data, it is determined, according to the format switching data of the third row, that the detection policy data of the fourth row is sequentially a card reader number, an instruction component, a detection instruction description, and a to-be-stored variable name from left to right, 00B0990008 is directly sent to a user card corresponding to the card reader number 2 as a detection instruction, return data of the user card is received, and the return data is used as a value corresponding to CardNo in the fault detection dictionary, where the return data is a serial number of the user card.

Then, it is determined that a fifth row of data is detection policy data, it is determined, according to the format switching data of the third row, that the detection policy data of the fifth row is sequentially a card reader number and an instruction component from left to right, 00A4000002DF01 is directly sent to a user card corresponding to the card reader number 2 as a detection instruction, and return data of the user card is received.

Then, it is determined that a sixth row of data is detection policy data, it is determined, according to the format switching data of the third row, that the detection policy data of the sixth row is sequentially a card reader number, an instruction component, a detection instruction description, and a to-be-stored variable name from left to right, 800400080000 is directly sent to a security chip of an electric meter corresponding to the card reader number 1 as a detection instruction, return data of the security chip of the electric meter is received, and the return data is used as a value corresponding to ESAM_Rand in the fault detection dictionary, where the return data is a random number of the security chip of the electric meter.

Then, it is determined that a seventh row of data is detection policy data, it is determined, according to the format switching data of the third row, that the detection policy data of the seventh row is sequentially a card reader number, an instruction component, a detection instruction description, and a to-be-stored variable name from left to right. Because the instruction component in the detection policy data of the seventh row includes a connector +, it may be determined that the instruction component in the detection policy data of the seventh row is a composite instruction. Further, by searching the fault detection dictionary, it may be determined that 80080801 and 0010 have no keywords with a same name in the fault detection dictionary and therefore keep unchanged, CardNo and ESAM_Rand have keywords of a same name in the fault detection dictionary, and corresponding values are respectively the serial number of the user card and the random number of the security chip of the electric meter. Therefore, 80080801, 0010, the serial number of the user card, and the random number of the security chip of the electric meter are randomly spliced together to generate a detection instruction to be sent to the security chip of the electric meter corresponding to the card reader number 1, and return data of the security chip of the electric meter is received, and the return data is used as a value corresponding to ESAM_ERand in the fault detection dictionary, where the return data is that the security chip of the electric meter calculates a random number ciphertext K1.

Then, it is determined that an eighth row of data is detection policy data, it is determined, according to the format switching data of the third row, that the detection policy data of the eighth row is sequentially a card reader number, an instruction component, a detection instruction description, and a to-be-stored variable name from left to right. Because the instruction component in the detection policy data of the eighth row includes a connector +, it may be determined that the instruction component in the detection policy data of the eighth row is a composite instruction. Further, by searching the fault detection dictionary, it may be determined that 0088000108 has no keyword with a same name in the fault detection dictionary and therefore keeps unchanged, ESAM_Rand has a keyword of a same name in the fault detection dictionary, and a corresponding value is that the security chip of the electric meter calculates a random number ciphertext K1. Therefore, 0088000108 and that the security chip of the electric meter calculates a random number ciphertext K1 are spliced together to generate a detection instruction to be sent to the user card corresponding to the card reader number 2, and return data of the user card is received, and the return data is used as a value corresponding to Card_ERand in the fault detection dictionary, where the return data is that the user card calculates a random number ciphertext K2.

Then, it is determined, according to seventh identifier &, that a ninth row of data is function data, the ninth row of data may be disassembled according to the first delimiter to determine that composition information of the function data in the ninth row is sequentially a function name, a function input parameter, a first detection conclusion, and a second detection conclusion from left to right, then a DataCompare function is invoked, a value K1 corresponding to ESAM_ERand and a value K2 corresponding to Card_ERand are obtained from the fault detection dictionary, and K1 and K2 are input into the DataCompare function as input parameters, to compare whether K1 is consistent with K2. If yes, the first detection conclusion "identity authentication between ESAM and the user card succeeds" is output. If no, the second detection conclusion "identity authentication between ESAM and the user card fails" is output.

Finally, a detection instruction of each row of detection policy data and corresponding return data are displayed on the interface. If a detection instruction description exists, the detection instruction description is also displayed on the interface. At the same time, a prompt box is popped up to display a detection conclusion obtained from function data of a last row. If the detection conclusion is "identity authentication between ESAM and the user card fails", the detection conclusion is displayed in red.

It should be noted that the specific values mentioned above are merely used as an example to describe the implementation of the present disclosure in detail, and should not be construed as a limitation on the present disclosure. In another example, implementation, or embodiment, another value may be selected according to the present disclosure, and is not specifically limited herein.

To implement the foregoing embodiment, an embodiment of the present disclosure provides a computer-readable storage medium. A program for detecting a fault on a security chip is stored on the computer-readable storage medium, and the program for detecting a fault on a security chip is executed by a processor to implement the method for detecting a fault on a security chip in any one of the foregoing embodiments.

According to the computer-readable storage medium in this embodiment of the present disclosure, when it is determined that a type of current row data in a fault detection file is detection policy data, composition information of the detection policy data is determined, where the composition information of the detection policy data includes an instruction component; when the instruction component is a composite instruction, a detection instruction is generated according to a fault detection dictionary and the instruction component, where the fault detection dictionary is generated according to a detection result of prior row data in the fault detection file; and fault detection is performed on a to-be-detected chip according to the detection instruction and the composition information, so that the detection result of the prior row data is automatically transmitted to fault detection corresponding to the current row data in a form of the composite instruction. In this way, transmission through manual replication is avoided and manual participation is reduced, thereby improving fault detection automation.

For example, in a case that the program for detecting a fault on a security chip is executed by the processor to implement the following steps of the method for detecting a fault on a security chip:
S 11: Determine a type of current row data in a fault detection file, and when the current row data is detection policy data, determine composition information of the detection policy data, where the composition information of the detection policy data includes an instruction component.
S13: When the instruction component is a composite instruction, generate a detection instruction according to a fault detection dictionary and the instruction component, where the fault detection dictionary is generated according to a detection result of prior row data in the fault detection file.
S15: Perform fault detection on a to-be-detected chip according to the detection instruction and the composition information.

It should be noted that the foregoing descriptions and the beneficial effects of the embodiment of the method for detecting a fault on a security chip are also applicable to the computer-readable storage medium in this embodiment of the present disclosure. To avoid redundancy, details are not described herein.

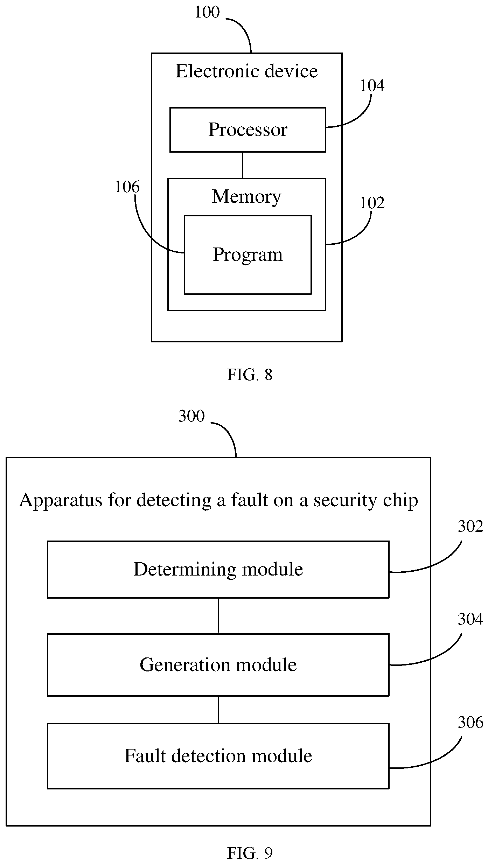

To implement the foregoing embodiments, an embodiment of the present disclosure further provides an electronic device. FIG. 8 is a structural block diagram of an electronic device according to an embodiment of the present disclosure. As shown in FIG. 8, the electronic device 100 includes a memory 102, a processor 104, and a program 106 for detecting a fault on a security chip, where the program 106 for detecting a fault on a security chip is stored in the memory 102 and can be run on the processor 104, and is executed by the processor 104 to implement the method for detecting a fault on a security chip in any one of the foregoing embodiments.

According to the electronic device 100 in this embodiment of the present disclosure, when it is determined that a type of current row data in a fault detection file is detection policy data, composition information of the detection policy data is determined, where the composition information of the detection policy data includes an instruction component; when the instruction component is a composite instruction, a detection instruction is generated according to a fault detection dictionary and the instruction component, where the fault detection dictionary is generated according to a detection result of prior row data in the fault detection file; and fault detection is performed on a to-be-detected chip according to the detection instruction and the composition information, so that the detection result of the prior row data is automatically transmitted to fault detection corresponding to the current row data in a form of the composite instruction. In this way, transmission through manual replication is avoided and manual participation is reduced, thereby improving fault detection automation.

For example, in a case that the program 106 for detecting a fault on a security chip is executed by the processor 104 to implement the following steps of the method for detecting a fault on a security chip:
S 11: Determine a type of current row data in a fault detection file, and when the current row data is detection policy data, determine composition information of the detection policy data, where the composition information of the detection policy data includes an instruction component.
S13: When the instruction component is a composite instruction, generate a detection instruction according to a fault detection dictionary and the instruction component, where the fault detection dictionary is generated according to a detection result of prior row data in the fault detection file.
S15: Perform fault detection on a to-be-detected chip according to the detection instruction and the composition information.

It should be noted that the foregoing descriptions and the beneficial effects of the embodiment of the method for detecting a fault on a security chip are also applicable to the electronic device 100 in this embodiment of the present disclosure. To avoid redundancy, details are not described herein.

To implement the foregoing embodiments, an embodiment of the present disclosure further provides an apparatus for detecting a fault on a security chip. FIG. 9 is a structural block diagram of an apparatus for detecting a fault on a security chip according to an embodiment of the present disclosure. As shown in FIG. 9, the apparatus 300 for detecting a fault on a security chip includes a determining module 302, a generation module 304, and a fault detection module 306. The determining module 302 is configured to: determine a type of current row data in a fault detection file, and when the current row data is detection policy data, determine composition information of the detection policy data; the generation module 304 is configured to: when an instruction component of the detection policy data is a composite instruction, generate a detection instruction according to a fault detection dictionary and the instruction component, where the fault detection dictionary is generated according to a detection result of prior row data; and the fault detection module 306 is configured to perform fault detection on a to-be-detected chip according to the detection instruction and the composition information.

According to the apparatus 300 for detecting a fault on a security chip in this embodiment of the present disclosure, when it is determined that a type of current row data in a fault detection file is detection policy data, composition information of the detection policy data is determined, where the composition information of the detection policy data includes an instruction component; when the instruction component is a composite instruction, a detection instruction is generated according to a fault detection dictionary and the instruction component, where the fault detection dictionary is generated according to a detection result of prior row data in the fault detection file; and fault detection is performed on a to-be-detected chip according to the detection instruction and the composition information, so that the detection result of the prior row data is automatically transmitted to fault detection corresponding to the current row data in a form of the composite instruction. In this way, transmission through manual replication is avoided and manual participation is reduced, thereby improving fault detection automation.

In some embodiments of the present disclosure, the generation module is further configured to disassemble the instruction component according to a connector, and store disassembled data in a first array; and update an element in the first array according to the fault detection dictionary, and generate the detection instruction according to the updated first array.

In some embodiments of the present disclosure, the generation module is further configured to match the element in the first array with a keyword in the fault detection dictionary; when the element matches the keyword, replace the element with a value corresponding to the keyword; and when the element does not match the keyword, retain the element.

In some embodiments of the present disclosure, the determining module is further configured to determine the composition information of the detection policy data according to format switching data in a prior row.

In some embodiments of the present disclosure, the determining module is further configured to disassemble, according to a first delimiter, the format switching data in the prior row to determine data content of the format switching data in the prior row; and determine the composition information of the detection policy data according to the data content of the format switching data in the prior row.

In some embodiments of the present disclosure, the data content of the format switching data in the prior row includes one or more of a first identifier, a second identifier, a third identifier, a fourth identifier, and a fifth identifier, the composition information of the detection policy data includes one or more of a card reader number, the instruction component, a detection instruction description, a return result judgment, and a to-be-stored variable name, and the data content of the format switching data in the prior row is in a one-to-one correspondence with the composition information of the detection policy data.

In some embodiments of the present disclosure, the fault detection module is further configured to: when the composition information includes the instruction component, send the detection instruction to the to-be-detected chip, and when return data of the to-be-detected chip is received, display the detection instruction and the return data; when the composition information includes the instruction component and the detection instruction description, send the detection instruction to the to-be-detected chip, and when the return data of the to-be-detected chip is received, display the detection instruction, the detection instruction description, and the return data; and when the composition information includes the instruction component, the detection instruction description, and the return result judgment, split the return result judgment according to a second delimiter, store split data in a second array, and perform the fault detection on the to-be-detected chip according to a quantity of elements in the second array.

In some embodiments of the present disclosure, the fault detection module is further configured to: when the quantity of elements in the second array is three, determine that the return result judgment includes expectation data, a first preset conclusion, and a second preset conclusion; send the detection instruction to the to-be-detected chip, and when the return data of the to-be-detected chip is received, match the return data with the expectation data; and determine, according to a matching result, that a detection conclusion is the first preset conclusion or the second preset conclusion, and display the detection instruction, the detection instruction description, the return data, and the detection conclusion.

In some embodiments of the present disclosure, the fault detection module is further configured to: when the quantity of elements in the second array is four, determine that the return result judgment includes judgment location data, expectation data, a first preset conclusion, and a second preset conclusion; send the detection instruction to the to-be-detected chip, and when the return data of the to-be-detected chip is received, match the return data with the expectation data according to the judgment location data; and determine, according to a matching result, that a detection conclusion is the first preset conclusion or the second preset conclusion, and display the detection instruction, the detection instruction description, the return data, and the detection conclusion.

In some embodiments of the present disclosure, the fault detection module is further configured to: if the matching result is expected, determine that the detection conclusion is the first preset conclusion; otherwise, determine that the detection conclusion is the second preset conclusion.

In some embodiments of the present disclosure, the composition information further includes the card reader number, and the fault detection module is further configured to send the detection instruction to the to-be-detected chip corresponding to the card reader number.

In some embodiments of the present disclosure, the composition information further includes the to-be-stored variable name, and the fault detection module is further configured to: when the return data of the to-be-detected chip is received, store the return data in the fault detection dictionary according to the to-be-stored variable name.

In some embodiments of the present disclosure, the apparatus for detecting a fault on a security chip further includes a second generation module, and the second generation module is configured to: when the instruction component is a single instruction, generate the detection instruction according to the instruction component.

In some embodiments of the present disclosure, the determining module is further configured to: when a sixth identifier is identified, determine that the current row data in the fault detection file is format switching data; when a seventh identifier is identified, determine that the current row data in the fault detection file is function data; and when no identifier is identified, determine that the current row data in the fault detection file is the detection policy data.

In some embodiments of the present disclosure, the apparatus for detecting a fault on a security chip further includes a second determining module, a first function module, and a second function module. The second determining module is configured to determine composition information of the function data; the first function module is configured to: when the composition information of the function data includes a function name, a function input parameter, a first detection conclusion, and a second detection conclusion, input a parameter value corresponding to the function input parameter into a function corresponding to the function name, and output the first detection conclusion or the second detection conclusion according to an execution result of the function; and the second function module is configured to: when the composition information of the function data includes the function name, the function input parameter, and a keyword in the fault detection dictionary, input the parameter value corresponding to the function input parameter into the function corresponding to the function name, and use the execution result of the function as a value corresponding to the keyword in the fault detection dictionary.

It should be noted that the foregoing descriptions and the beneficial effects of the embodiment of the method for detecting a fault on a security chip are also applicable to the apparatus 300 for detecting a fault on a security chip in this embodiment of the present disclosure. To avoid redundancy, details are not described herein.

A person skilled in the art should understand that the embodiments of the present disclosure may be provided as a method, a system, or a computer program product. Therefore, the present disclosure may use a form of hardware only embodiments, software only embodiments, or embodiments with a combination of software and hardware. Moreover, the present disclosure may use a form of a computer program product that is implemented on one or more computer-usable storage media (including but not limited to a magnetic disk memory, a CD-ROM, an optical memory, and the like) that include computer-usable program code.

The present disclosure is described with reference to the flowcharts and/or block diagrams of the method, the device (system), and the computer program product according to the embodiments of the present disclosure. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of another programmable data processing device to generate a machine, so that the instructions executed by a computer or a processor of another programmable data processing device generate an apparatus for implementing a specific function in one or more processes in the flowcharts and/or in one or more blocks in the block diagrams.

These computer program instructions may be alternatively stored in a computer-readable memory that can instruct a computer or another programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

These computer program instructions may be alternatively loaded onto a computer or another programmable data processing device, so that a series of operations and steps are performed on the computer or the another programmable device, thereby generating computer-implemented processing. Therefore, the instructions executed on the computer or the another programmable device provide steps for implementing a specific function in one or more processes in the flowcharts and/or in one or more blocks in the block diagrams.

In descriptions in this specification, descriptions about such reference terms as "an embodiment", "some embodiments", "an example", "a specific example", and "some examples" mean that specific features, structures, materials, or characteristics described with reference to the embodiments or examples are included in at least one embodiment or example of the present disclosure. In this specification, the foregoing example expressions of the terms are not necessarily with respect to a same embodiment or example. In addition, the described specific features, structures, materials, or characteristics may be combined in a proper manner in any one or more of the embodiments or examples.

In addition, the terms "first" and "second" used in the embodiments of the present disclosure are merely used for a description purpose, and shall not be understood as an indication or implication of relative importance or implicit indication of a quantity of indicated technical features in the embodiments. Therefore, in the embodiments of the present disclosure, features of the terms such as "first" and "second" may explicitly or implicitly indicate that at least one of the features is included in the embodiments. In the descriptions of the present disclosure, the word "a plurality of" means at least two or more, for example, two, three, or four, unless otherwise specifically limited in the embodiments.

It should be noted that the technical features in the foregoing embodiments may be randomly combined. To make the description brief, all possible combinations of the technical features in the foregoing embodiments are not described. However, as long as there is no contradiction between a combination of the technical features, the combination shall fall within the scope of this specification.

Although the embodiments of the present disclosure are shown and described above, it can be understood that, the foregoing embodiments are examples, and cannot be construed as a limitation to the present disclosure. Within the scope of the present disclosure, a person of ordinary skill in the art may make changes, modifications, replacement, and variations to the foregoing embodiments.

## Claims

1. A method for detecting a fault on a security chip, comprising:
determining a type of current row data in a fault detection file, and when the current row data is detection policy data, determining composition information of the detection policy data, wherein the composition information of the detection policy data comprises an instruction component;
when the instruction component is a composite instruction, generating a detection instruction according to a fault detection dictionary and the instruction component, wherein the fault detection dictionary is generated according to a detection result of prior row data in the fault detection file; and
performing fault detection on a to-be-detected chip according to the detection instruction and the composition information.

2. The method for detecting a fault on a security chip according to claim 1, wherein the generating a detection instruction according to a fault detection dictionary and the instruction component comprises:
disassembling the instruction component according to a connector, and storing disassembled data in a first array; and
updating an element in the first array according to the fault detection dictionary, and generating the detection instruction according to the updated first array.

3. The method for detecting a fault on a security chip according to claim 2, wherein the updating an element in the first array according to the fault detection dictionary comprises:
matching the element in the first array with a keyword in the fault detection dictionary;
when the element matches the keyword, replacing the element with a value corresponding to the keyword; and
when the element does not match the keyword, retaining the element.

4. The method for detecting a fault on a security chip according to claim 1, wherein the determining composition information of the detection policy data comprises:
determining the composition information of the detection policy data according to format switching data in a prior row.

5. The method for detecting a fault on a security chip according to claim 4, wherein the determining the composition information of the detection policy data according to format switching data in a prior row comprises:
disassembling, according to a first delimiter, the format switching data in the prior row to determine data content of the format switching data in the prior row; and
determining the composition information of the detection policy data according to the data content of the format switching data in the prior row.

6. The method for detecting a fault on a security chip according to claim 5, wherein the data content of the format switching data in the prior row comprises one or more of a first identifier, a second identifier, a third identifier, a fourth identifier, and a fifth identifier, the composition information of the detection policy data comprises one or more of a card reader number, the instruction component, a detection instruction description, a return result judgment, and a to-be-stored variable name, and the data content of the format switching data in the prior row is in a one-to-one correspondence with the composition information of the detection policy data.

7. The method for detecting a fault on a security chip according to claim 6, wherein the performing fault detection on a to-be-detected chip according to the detection instruction and the composition information comprises:
when the composition information comprises the instruction component, sending the detection instruction to the to-be-detected chip, and when return data of the to-be-detected chip is received, displaying the detection instruction and the return data;
when the composition information comprises the instruction component and the detection instruction description, sending the detection instruction to the to-be-detected chip, and when the return data of the to-be-detected chip is received, displaying the detection instruction, the detection instruction description, and the return data; and
when the composition information comprises the instruction component, the detection instruction description, and the return result judgment, splitting the return result judgment according to a second delimiter, storing split data in a second array, and performing the fault detection on the to-be-detected chip according to a quantity of elements in the second array.

8. The method for detecting a fault on a security chip according to claim 7, wherein the performing the fault detection on the to-be-detected chip according to a quantity of elements in the second array comprises:
when the quantity of elements in the second array is three, determining that the return result judgment comprises expectation data, a first preset conclusion, and a second preset conclusion;
sending the detection instruction to the to-be-detected chip, and when the return data of the to-be-detected chip is received, matching the return data with the expectation data; and
determining, according to a matching result, that a detection conclusion is the first preset conclusion or the second preset conclusion, and displaying the detection instruction, the detection instruction description, the return data, and the detection conclusion.

9. The method for detecting a fault on a security chip according to claim 7, wherein the performing the fault detection on the to-be-detected chip according to a quantity of elements in the second array comprises:
when the quantity of elements in the second array is four, determining that the return result judgment comprises judgment location data, expectation data, a first preset conclusion, and a second preset conclusion;
sending the detection instruction to the to-be-detected chip, and when the return data of the to-be-detected chip is received, matching the return data with the expectation data according to the judgment location data; and
determining, according to a matching result, that a detection conclusion is the first preset conclusion or the second preset conclusion, and displaying the detection instruction, the detection instruction description, the return data, and the detection conclusion.

10. The method for detecting a fault on a security chip according to claim 8 or 9, wherein the determining, according to a matching result, that a detection conclusion is the first preset conclusion or the second preset conclusion comprises:
if the matching result is expected, determining that the detection conclusion is the first preset conclusion; otherwise, determining that the detection conclusion is the second preset conclusion.

11. The method for detecting a fault on a security chip according to claim 7, wherein the composition information further comprises the card reader number, and the sending the detection instruction to the to-be-detected chip comprises:
sending the detection instruction to the to-be-detected chip corresponding to the card reader number.

12. The method for detecting a fault on a security chip according to claim 7 or 11, wherein the composition information further comprises the to-be-stored variable name, and the method further comprises:
when the return data of the to-be-detected chip is received, storing the return data in the fault detection dictionary according to the to-be-stored variable name.

13. The method for detecting a fault on a security chip according to claim 1, wherein after the determining composition information of the detection policy data, the method further comprises:
when the instruction component is a single instruction, generating the detection instruction according to the instruction component.

14. The method for detecting a fault on a security chip according to claim 1, wherein the determining a type of current row data in a fault detection file comprises:
when a sixth identifier is identified, determining that the current row data in the fault detection file is format switching data;
when a seventh identifier is identified, determining that the current row data in the fault detection file is function data; and
when no identifier is identified, determining that the current row data in the fault detection file is the detection policy data.

15. The method for detecting a fault on a security chip according to claim 14, wherein after the determining that the current row data in the fault detection file is function data, the method further comprises:
determining composition information of the function data;
when the composition information of the function data comprises a function name, a function input parameter, a first detection conclusion, and a second detection conclusion, inputting a parameter value corresponding to the function input parameter into a function corresponding to the function name, and outputting the first detection conclusion or the second detection conclusion according to an execution result of the function; and
when the composition information of the function data comprises the function name, the function input parameter, and a keyword in the fault detection dictionary, inputting the parameter value corresponding to the function input parameter into the function corresponding to the function name, and using the execution result of the function as a value corresponding to the keyword in the fault detection dictionary.

16. A computer-readable storage medium, wherein a program for detecting a fault on a security chip is stored on the computer-readable storage medium, and the program for detecting a fault on a security chip is executed by a processor to implement the method for detecting a fault on a security chip according to any one of claims 1 to 15.

17. An electronic device, comprising a memory, a processor, and a program for detecting a fault on a security chip, wherein the program for detecting a fault on a security chip is stored in the memory and able to be run on the processor, and is executed by the processor to implement the method for detecting a fault on a security chip according to any one of claims 1 to 15.

18. An apparatus for detecting a fault on a security chip, comprising:
a determining module, configured to determine a type of current row data in a fault detection file, and when the current row data is detection policy data, determine composition information of the detection policy data;
a generation module, configured to: when an instruction component of the detection policy data is a composite instruction, generate a detection instruction according to a fault detection dictionary and the instruction component, wherein the fault detection dictionary is generated according to a detection result of prior row data; and
a fault detection module, configured to perform fault detection on a to-be-detected chip according to the detection instruction and the composition information.

19. The apparatus for detecting a fault on a security chip according to claim 18, wherein the generation module is further configured to:
disassemble the instruction component according to a connector, and store disassembled data in a first array; and
update an element in the first array according to the fault detection dictionary, and generate the detection instruction according to the updated first array.

20. The apparatus for detecting a fault on a security chip according to claim 19, wherein the generation module is further configured to:
match the element in the first array with a keyword in the fault detection dictionary;
when the element matches the keyword, replace the element with a value corresponding to the keyword; and
when the element does not match the keyword, retain the element.

21. The apparatus for detecting a fault on a security chip according to claim 18, wherein the determining module is further configured to:
determine the composition information of the detection policy data according to format switching data in a prior row.

22. The apparatus for detecting a fault on a security chip according to claim 21, wherein the determining module is further configured to:
disassemble, according to a first delimiter, the format switching data in the prior row to determine data content of the format switching data in the prior row; and
determine the composition information of the detection policy data according to the data content of the format switching data in the prior row.

23. The apparatus for detecting a fault on a security chip according to claim 22, wherein the data content of the format switching data in the prior row comprises one or more of a first identifier, a second identifier, a third identifier, a fourth identifier, and a fifth identifier, the composition information of the detection policy data comprises one or more of a card reader number, the instruction component, a detection instruction description, a return result judgment, and a to-be-stored variable name, and the data content of the format switching data in the prior row is in a one-to-one correspondence with the composition information of the detection policy data.

24. The apparatus for detecting a fault on a security chip according to claim 23, wherein the fault detection module is further configured to:
when the composition information comprises the instruction component, send the detection instruction to the to-be-detected chip, and when return data of the to-be-detected chip is received, display the detection instruction and the return data;
when the composition information comprises the instruction component and the detection instruction description, send the detection instruction to the to-be-detected chip, and when the return data of the to-be-detected chip is received, display the detection instruction, the detection instruction description, and the return data; and
when the composition information comprises the instruction component, the detection instruction description, and the return result judgment, split the return result judgment according to a second delimiter, store split data in a second array, and perform the fault detection on the to-be-detected chip according to a quantity of elements in the second array.

25. The apparatus for detecting a fault on a security chip according to claim 24, wherein the fault detection module is further configured to:
when the quantity of elements in the second array is three, determine that the return result judgment comprises expectation data, a first preset conclusion, and a second preset conclusion;
send the detection instruction to the to-be-detected chip, and when the return data of the to-be-detected chip is received, match the return data with the expectation data; and
determine, according to a matching result, that a detection conclusion is the first preset conclusion or the second preset conclusion, and display the detection instruction, the detection instruction description, the return data, and the detection conclusion.

26. The apparatus for detecting a fault on a security chip according to claim 24, wherein the fault detection module is further configured to:
when the quantity of elements in the second array is four, determine that the return result judgment comprises judgment location data, expectation data, a first preset conclusion, and a second preset conclusion;
send the detection instruction to the to-be-detected chip, and when the return data of the to-be-detected chip is received, match the return data with the expectation data according to the judgment location data; and
determine, according to a matching result, that a detection conclusion is the first preset conclusion or the second preset conclusion, and display the detection instruction, the detection instruction description, the return data, and the detection conclusion.

27. The apparatus for detecting a fault on a security chip according to claim 25 or 26, wherein the fault detection module is further configured to:
if the matching result is expected, determine that the detection conclusion is the first preset conclusion; otherwise, determine that the detection conclusion is the second preset conclusion.

28. The apparatus for detecting a fault on a security chip according to claim 24, wherein the composition information further comprises the card reader number, and the fault detection module is further configured to:
send the detection instruction to the to-be-detected chip corresponding to the card reader number.

29. The apparatus for detecting a fault on a security chip according to claim 24 or 28, wherein the composition information further comprises the to-be-stored variable name, and the fault detection module is further configured to:
when the return data of the to-be-detected chip is received, store the return data in the fault detection dictionary according to the to-be-stored variable name.

30. The apparatus for detecting a fault on a security chip according to claim 18, wherein the apparatus further comprises:
a second generation module, configured to: when the instruction component is a single instruction, generate the detection instruction according to the instruction component.

31. The apparatus for detecting a fault on a security chip according to claim 18, wherein the determining module is further configured to:
when a sixth identifier is identified, determine that the current row data in the fault detection file is format switching data;
when a seventh identifier is identified, determine that the current row data in the fault detection file is function data; and
when no identifier is identified, determine that the current row data in the fault detection file is the detection policy data.

32. The apparatus for detecting a fault on a security chip according to claim 31, wherein the apparatus further comprises:
a second determining module, configured to determine composition information of the function data;
a first function module, configured to: when the composition information of the function data comprises a function name, a function input parameter, a first detection conclusion, and a second detection conclusion, input a parameter value corresponding to the function input parameter into a function corresponding to the function name, and output the first detection conclusion or the second detection conclusion according to an execution result of the function; and
a second function module, configured to: when the composition information of the function data comprises the function name, the function input parameter, and a keyword in the fault detection dictionary, input the parameter value corresponding to the function input parameter into the function corresponding to the function name, and use the execution result of the function as a value corresponding to the keyword in the fault detection dictionary.
